# EUROPÄISCHE PATENTSCHRIFT

(11) **EP 0 567 516 B1**
(45) Veröffentlichungstag und Bekanntmachung des Hinweises auf die Patenterteilung: **12.04.1995**
(21) Anmeldenummer: 92903074.0
(22) Anmeldetag: 27.01.1992
(51) Int. Cl.: B60G 5/00, B60G 7/00, B60G 3/20, B60G 11/27, B60B 11/08

(54) **RADAUFHÄNGUNG**
WHEEL SUSPENSION
SUSPENSION

(30) Priorität: 26.01.1991 DE 4102313
(43) Veröffentlichungstag der Anmeldung: 03.11.1993
(73) Patentinhaber: ZF FRIEDRICHSHAFEN AG, 88038 Friedrichshafen (DE)
(72) Erfinder: Lanz, Hermann, D-7990 Friedrichshafen (DE); Eidam, Dirk-Uwe, D-5024 Pulheim (DE); Gazyakan, Ünal, D-7990 Friedrichshafen (DE)
(86) Internationale Anmeldenummer: EP9200166
(87) Internationale Veröffentlichungsnummer: WO9212868

(56) Entgegenhaltungen:
- BE-A- 415 124
- DE-A- 2 835 865
- DE-A- 3 930 811
- DE-A- 4 029 288
- DE-B- 1 229 857
- FR-A- 1 096 872
- FR-A- 1 473 154
- US-A- 2 441 807
- US-A- 3 000 648

## Beschreibung

Die Erfindung bezieht sich auf eine Radaufhängung für mindestens ein Fahrzeugrad, das von einem Radträger getragen ist, der gegenüber einem Fahrzeugrahmen durch Führungs- und Federmittel höhenbeweglich geführt ist.

Die Erfindung bezieht sich allgemein auf Radaufhängungen, die für Räder mit breiter Bereifung Verwendung finden sollen. Bei der angesprochenen Bereifung kann es sich beispielsweise um einen Breitreifen oder ein Rad mit einer Zwillingsbereifung handeln. Eine breite Bereifung bei einem Kraftfahrzeug hat vor allem den Vorteil, daß die Seitenführungskraft vergrößert wird, verglichen mit einer Normalbereifung. Durch eine größere Seitenführungskraft wird die Spurhaltung des Kraftfahrzeugs erheblich verbessert. Die Erfindung befaßt sich vor allem mit einer Radaufhängung für ein zwillingsbereiftes Rad eines Nutzkraftfahrzeugs, wie z. B. einem Stadt- oder Reisebus.

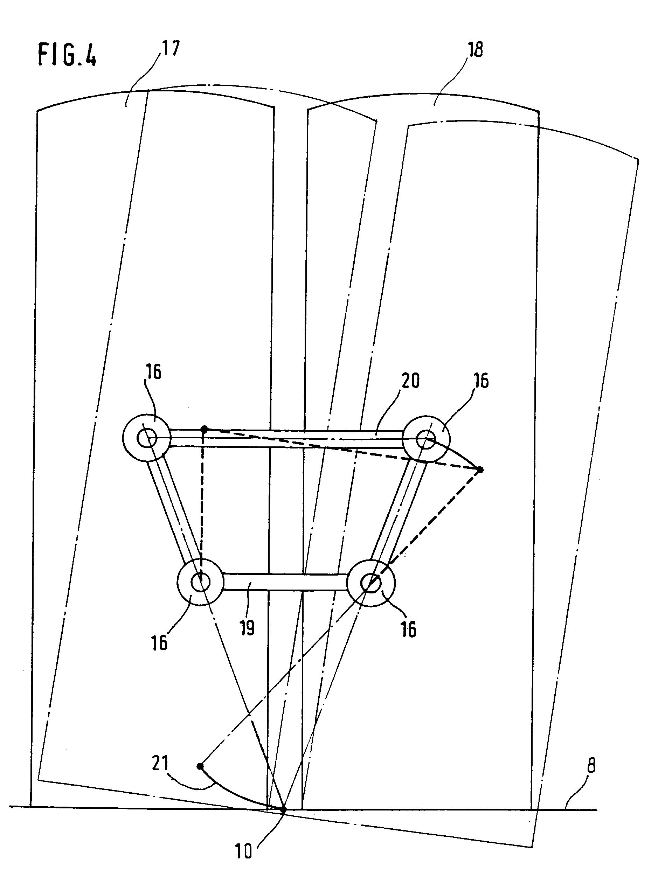

Bei Nutzkraftfahrzeugen mit Zwillingsbereifung finden praktisch ausschließlich Starrachsen Verwendung. Bei dieser Konstruktion ist die Reifenstellung zur Fahrbahn unabhängig von der Neigung des Aufbaus. Es findet keine Spur- und Sturzänderung beim gleichzeitigen Ein- und Ausfedern statt. Vorteilhaft ist vor allem, daß Radlastschwankungen, hervorgerufen von Querkräften, innerhalb einer Zwillingsbereifung relativ gering sind. Den Vorteilen einer zwillingsbereiften Starrachse stehen jedoch auch Nachteile gegenüber: Die Achsbrücke unterhalb des Fahrzeugrahmens schränkt die Bodenfreiheit ein. Dies ist insbesondere bei Kraftfahrzeugen von Nachteil, die eine geringe Flurhöhe und/oder Schwerpunktlage aufweisen sollen. Ferner wirken sich Spurrillen sehr ungünstig auf das Radlastverhältnis aus, da im Extremfall nur noch ein Reifen der Zwillingsbereifung trägt. Bei der Auslegung der Bereifung ist daher ein entsprechender Sicherheitsfaktor zu berücksichtigen. Aus der DE-A-28 35 865 ist ein Nutzkraftfahrzeug, insbesondere Omnibus, bekanntgeworden, der eine Achskonstruktion mit einer Radaufhängung für ein zwillingsbereiftes Fahrzeugrad aufweist (Fig. 4). Das Fahrzeugrad ist von einem Radträger getragen, der gegenüber einem Fahrzeugrahmen durch Führungs- und Federmittel höhenbeweglich geführt ist. Die Führungsmittel bestehen hierbei aus Doppelquerlenkern. Die Federmittel werden aus einer Luftfeder und einem Dämpfer gebildet. Bei dieser Achskonstruktion werden die zwillingsbereiften Fahrzeugräder angetrieben.

Bei der vorstehend erläuterten Radaufhängung können durch geeignetes Längenverhältnis der Doppelquerlenker Sturz- und Spurweitenänderungen relativ klein gehalten werden. Grundsätzlich gilt jedoch, daß eine Wankbewegung den Fahrzeugrädern einen Sturz aufzwingt, was auch bei dieser Konstruktion zu erheblichen Schwankungen der Radlasten durch Sturzänderungen relativ zur Fahrbahn führt. Bewegt sich das Fahrzeug in eine Kurve, kommt es zu einer erheblichen Mehrbelastung des kurvenäußeren Reifens des äußeren zwillingsbereiften Fahrzeugrades, während der kurveninnere Reifen des kurveninneren Fahrzeugrades erheblich entlastet wird. Das Radlastverhältnis der jeweils innenliegenden Reifen des kurvenäußeren und des kurveninneren Fahrzeugrades ändert sich hingegen wenig.

Bei modernen Stadt- und Reisebussen wird besonderer Wert darauf gelegt, daß der Boden des Fahrgastraumes möglichst niedrig liegt, um den Einstieg zu erleichtern. Wenn es sich um einen Bus mit einem Laufgang handelt, soll der Laufgang eine möglichst große Breite in Fahrzeugquerrichtung aufweisen und sein Boden soll möglichst tief liegen. Bei der vorbekannten zwillingsbereiften Achskonstruktion beansprucht die Radaufhängung über Doppelquerlenker einen großen Bauraum in Fahrzeugquerrichtung. Aus diesem Grund läßt sich ein Laufgang keineswegs in einer Lage unterbringen, die der Zeichnung entspricht. Der Laufgang kann nur oberhalb von den Querlenkern angebracht werden.

Aus der gattungsbildenden BE-A-415 124 ist ferner eine Achskonstruktion bekanntgeworden, bei der die Radaufhängung einen zusätzlichen Freiheitsgrad aufweist, der einem Radträger eine Schwenkbewegung in einer Fahrzeugquerebene um eine in Fahrzeuglängsrichtung verlaufende Drehachse erlaubt. Auch diese Konstruktion ist beispielsweise für einen Bus mit einem Laufgang aus den eingangs erläuterten Gründen nicht brauchbar.

In der älteren, nicht vorveröffentlichten EP-A-0 462 399 ist eine Radaufhängung für ein Fahrzeugrad offenbart, die einen zusätzlichen Freiheitsgrad aufweist, der dem Radträger eine Schwenkbewegung in einer Fahrzeugquerebene um eine in Fahrzeuglängsrichtung verlaufende Drehachse erlaubt. Die Drehachse verläuft etwa in der Mitte des Fahrzeugrades und etwa in Höhe der Radaufstandsfläche. Der Radträger ist durch paarweise angeordnete Führungslenker über einen Radführungslenker am Fahrzeugaufbau gelagert. Die Führungslenker sind zu beiden Seiten einer Raddrehachse - innerhalb der Radfelge liegend - angeordnet.

Ausgehend von der nach der BE-A-415 125 offenbarten Konstruktion liegt der vorliegenden Erfindung die Aufgabe zugrunde, eine Einzelraufhängung für ein Fahrzeugrad, insbesondere einem zwillingsbereiften Fahrzeugrad, zu schaffen, mit der das Problem starker Radlastschwankungen infolge Sturzveränderungen relativ zur Fahrbahn behoben ist. Die Radaufhängung soll ferner so beschaffen sein, daß sie den Besonderheiten bei Omnibussen Rechnung trägt.

Das der Erfindung zugrunde liegende Problem wird durch eine Radaufhängung, die die Merkmale nach den kennzeichnenden Teilen der unabhängigen Ansprüche aufweist, gelöst.

Die Drehachse, die dem Radträger eine Schwenkbewegung erlaubt, verläuft in Fahrzeuglängsrichtung. Sie liegt etwa in der Längsmittelebene des Rades und etwa in Höhe der Fahrbahnebene. Gegenüber dem Stand der Technik, bei dem Sturzänderungen große Radlastschwankungen auslösen, wird bei der erfindungsgemäßen Lösung dieser nachteilige Einfluß durch den zusätzlichen Freiheitsgrad gelöst. Sturzänderungen des Fahrzeugrades relativ zur Fahrbahn beeinflussen die Radlastverteilung in praktischem Maße nicht mehr. Die Radlastverteilung wird im wesentlichen durch die Lage des Momentanzentrums des Fahrzeugrades bestimmt. Insbesondere wird bei Wankbewegungen den Fahrzeugrädern keine Sturzänderung aufgezwungen. Die erfindungsgemäße Lösung eignet sich vor allem für Fahrzeugräder, die eine große Radaufstandsfläche aufweisen. Insbesondere sind dies zwillingsbereifte Fahrzeugräder oder Räder mit Breitreifen. Da die Radaufstandsfläche auch bei Wankbewegungen bzw. bei sich verändernder Fahrbahn erhalten bleibt, ist eine problemlose Aufnahme von Querkräften möglich. Wenn die in Fahrzeuglängsrichtung verlaufende Drehachse vorzugsweise etwas unterhalb der Fahrbahnebene liegt, wird eine sehr hohe Seitenstabilität erreicht. Ein wesentlicher Vorteil der erfindungsgemäßen Lösung besteht ferner darin, daß das Verhältnis der Radlasten bzw. die Radlastverteilung im Falle eines Breitreifens unabhängig vom Einfederungszustand des Fahrzeugrades ist. Durch eine geschickte konstruktive Auslegung der Radaufhängung ist es möglich, die horizontale und vertikale Bewegung der in Fahrzeuglängsrichtung verlaufenden Drehachse gering zu halten.

Eine Einzelradaufhängung, deren Einsatz insbesondere bei Stadt- und Reisebussen mit großen Vorteilen verbunden ist, weist einen Radträger auf, der aus mindestens einem Längsträger und zwei Querträgern gebildet ist. Die Führungsmittel bestehen aus Führungslenkern, die paarweise am Radträger und am Fahrzeugrahmen angelenkt sind. Sie liegen vor und hinter dem Fahrzeugrad. Der Radträger kann um eine in Fahrzeuglängsrichtung verlaufende Drehachse schwenken, die etwa in der Mitte des Fahrzeugrades und etwa in Höhe der Fahrbahnebene verläuft. Als Führungslenker sind beispielsweise auch stangenförmige Einzellenker, trapezförmige Platten oder auch Gitterkonstruktionen verwendbar. Der Radträger kann aus Kastenprofilen zusammengeschweißt sein, was eine sehr stabile, verwindungssteife Konstruktion ergibt. Eine derartige Radaufhängung baut insgesamt sehr kompakt, so daß der zwischen den Rädern zur Verfügung stehende Raum zur Unterbringung eines Laufganges, im Falle eines Busses, optimal genutzt werden kann.

Bei einer weiteren vorteilhaften Alternative wird vorgeschlagen, den Radträger schwenkbeweglich an kreisförmigen Gleitbahnen zu führen. Wenn diese Gleitbahnen kreisförmig gekrümmt verlaufen, stellen sich - etwa in der Mitte des Rades, bezogen auf seine Breite, und etwa in Höhe der Fahrbahnebene - ideelle Führungsgelenke ein. Eine Gerade, die diese Führungsgelenke miteinander verbindet, bildet die Drehachse, um die das Fahrzeugrad während des Betriebs in Fahrzeugquerrichtung schwenkt.

Die Gleitbahnen können hierbei unmittelbar oder über Führungslenker mittelbar am Fahrzeugrahmen befestigt sein. Der Radträger wird über Führungslager längs dieser Gleitbahnen geführt. Eine Gleitbahn kann beispielsweise aus einem Rohr oder Stangenmaterial gebildet sein. Die Führungslager können beispielsweise von Gleitlagern gebildet werden, die die Gleitbahnen umschließen. Es ist aber auch möglich, daß die Gleitbahnen als Führungsschienen ausgebildet sind, an denen z. B. rollenförmige Führungslager geführt sind.

Die Drehachse, die durch den zusätzlichen Freiheitsgrad der Radaufhängung bereitgestellt wird, verändert ihre Lage während des Betriebes in horizontaler und vertikaler Richtung - bezogen auf eine Fahrzeugquerebene - geringfügig. Die Drehachse verlagert sich auf einer Kurvenbahn entweder zur Fahrzeugmitte hin oder in Richtung auf die Fahrzeugaußenseite. Die Richtung der Verlagerung der Drehachse kann konstruktiv vorgegeben werden. Sie ist abhängig davon, ob die Gelenke der Führungslenker am Fahrzeugrahmen oberhalb von den Gelenken am Radträger liegen oder umgekehrt. Bei zunehmendem Sturz des Fahrzeugrades in Richtung Fahrzeugmitte findet eine Verlagerung der Drehachse in Richtung Fahrzeugmitte statt, wenn die Gelenke am Fahrzeugrahmen in Vertikalrichtung über den Gelenken am Radträger liegen. Bei umgekehrter Anordnung der Gelenke verlagert sich die Drehachse auf einer Bewegungsbahn, die zur Fahrzeugaußenseite hin gerichtet ist.

Die vorstehend erläuterte Erkenntnis der Zusammenhänge wird bei der Erfindung in sehr vorteilhafter Weise zunutze gemacht, indem, bezogen auf die Fahrzeuglängsrichtung, den Gelenken jeweils paarweise zusammenwirkender Führungslenker am Fahrzeugrahmen jeweils die Gelenke dieser Führungslenker am Radträger in gleicher Höhenlage gegenüberliegen. Der positive Effekt dieser Anordnung besteht darin, daß sich die nach außen gerichtete und die nach innen gerichtete Verlagerung der Drehachse gegenseitig aufhebt. Wesentlich ist insbesondere, daß bei dieser Anordnung praktisch keine Änderung der Vorspur eintritt.

Bei einem Ausführungsbeispiel nach der Erfindung bestehen die Federmittel aus einer Luftfeder, mit der der Radträger in seinem hinter dem Rad liegenden Bereich am Fahrzeugrahmen abgestützt ist. Ein wesentlicher Vorteil dieser Anordnung besteht darin, daß die Kinematik der Radaufhängung der Federungskinematik vorgeschaltet ist. Unabhängig von der Federungskinematik kann sich das Fahrzeugrad der Fahrbahnneigung anpassen, da die Führungslenker am Radträger befestigt sind und ihre Stellung von der Federungskinematik nicht beeinflußt wird.

In der Regel schließen die Führungsmittel der Radaufhängung zusätzliche Führungslenker ein. Diese verbinden die dem Fahrzeugrahmen zugeordneten Gelenke der Führungslenker mit dem Fahrzeugrahmen. Die zusätzlichen Führungslenker legen den Radträger in Fahrzeuglängs- und -querrichtung fest.

Die vorgeschlagene Radaufhängung ist insbesondere bei einem Nutzfahrzeug, insbesondere einem Omnibus, mit großen Vorteilen einsetzbar. Zu diesen Vorteilen zählen insbesondere die gleichmäßige Verteilung großer Radlasten und die Aufnahme hoher Querkräfte. Die Radaufhängung ist unabhängig von der Federungskinematik. Die Anordnung baut insbesondere in Fahrzeugquerrichtung sehr kompakt, so daß bei einem Stadtbus ein niedriger Einstieg und ein breiter Laufgang verwirklicht werden kann.

Weitere, für die Erfindung wesentliche Merkmale und die daraus resultierenden Vorteile sind der nachfolgenden Beschreibung verschiedener Ausführungsbeispiele der Erfindung zu entnehmen.

Es zeigen:
- Fig. 1: eine Prinzipskizze zur Erläuterung des Lösungsgedankens bei einer ersten Ausführungsform der Erfindung;
- Fig. 2: eine weitere Prinzipskizze zur Erläuterung des Lösungsgedankens bei einer weiteren Ausführungsform nach der Erfindung;
- Fig. 3 und 4: weitere Prinzipskizzen zur Erläuterung der Kinematik einer Radaufhängung;
- Fig. 5: eine mögliche Ausführungsform einer Radaufhängung, der das Lösungsprinzip nach Fig. 1 zugrunde liegt;
- Fig. 6: eine mögliche Ausführungsform einer Radaufhängung, der das Lösungsprinzip nach Fig. 2 zugrunde liegt;
- Fig. 7: ein weiteres Ausführungsbeispiel einer erfindungsgemäßen Radaufhängung.

Soweit im einzelnen nicht anders angegeben, haben die nachstehenden Ausdrücke folgende Bedeutung:
"Vorne" bezieht sich auf die Fahrtrichtung;
"hinten" heißt entgegengesetzt zur Fahrtrichtung;
"außen" bezieht sich auf eine äußere bzw. kurvenäußere Seite eines Fahrzeugs;
"innen" bezieht sich auf die Fahrzeugmitte;
"oben" bezieht sich auf eine Vertikalrichtung nach oben und
"unten" bezieht sich auf eine Vertikalrichtung nach unten.

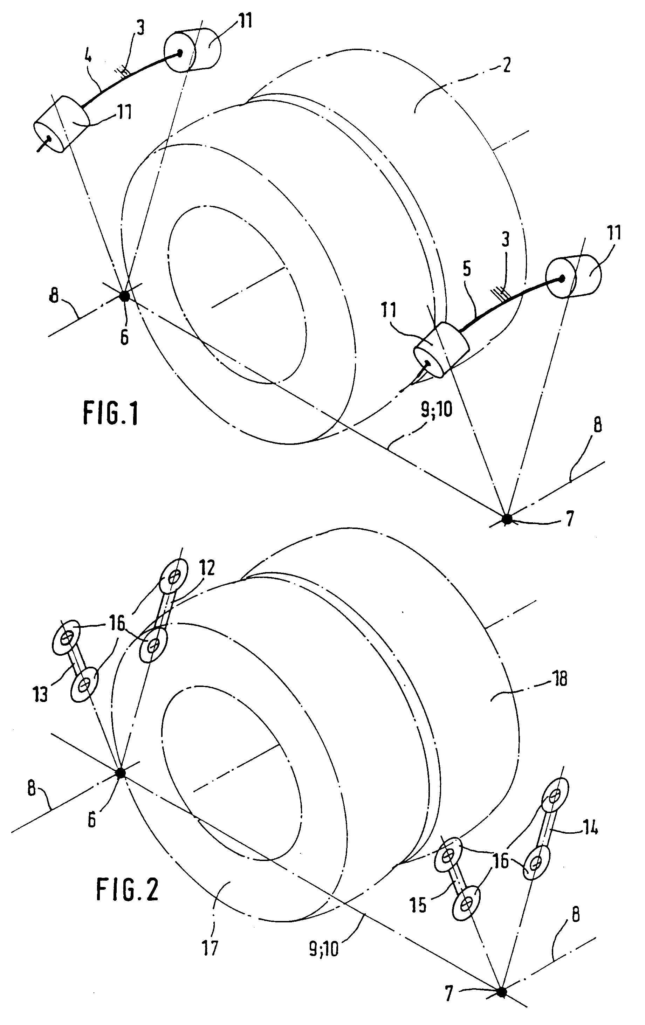

Die Prinzipskizze nach Fig. 1 dient der Erläuterung des grundsätzlichen Lösungskonzepts einer erfindungsgemäßen Radaufhängung, die als Gesamtheit mit der Bezugsziffer 1 gekennzeichnet ist. Die Radaufhängung 1 dient der Führung und Abstützung eines Fahrzeugrads 2. Im vorliegenden Fall handelt es sich um ein zwillingsbereiftes Fahrzeugrad 2. Anstelle eines zwillingsbereiften Fahrzeugrads 2 kann ein Fahrzeugrad 2 verwendet werden, das mit einem Breitreifen bestückt ist, wobei in den angesprochenen Fällen in etwa vergleichbare Verhältnisse bezüglich der Radlasten, Radaufstandsflächen usw. vorliegen sollen.

An einem Fahrzeugfestpunkt 3 ist in geeigneter Weise eine vor dem Fahrzeugrad 2 liegende Gleitbahn 4 und eine hinter dem Fahrzeugrad 2 liegende Gleitbahn 5 befestigt. Die Gleitbahnen 4 und 5 verlaufen kreisförmig gekrümmt. Ihre Krümmungszentren bilden ideelle Führungsgelenke 6 (vorne) und 7 hinten. Die ideellen Führungsgelenke 6 und 7 liegen etwa auf Höhe der Fahrbahnebene 8, die durch die strichpunktiert eingezeichneten Geraden angedeutet ist. Eine mit gestrichelten Linien gezeichnete Gerade 9 verbindet die ideellen Führungsgelenke 6 und 7 miteinander. Die Gerade 9 stellt eine Drehachse 10 dar, die
- in Fahrzeuglängsrichtung verläuft,
- etwa auf Höhe der Fahrbahnebene 8 und
- etwa in der Mitte des Fahrzeugrads 2 - bezogen auf die Breite des Fahrzeugrads 2 in Fahrzeugguerrichtung - liegt.

Das Fahrzeugrad 2 ist über paarweise vorne und hinten angeordnete Führungslager 11 längs der Gleitbahnen 4 und 5 geführt. Das Fahrzeugrad 2 kann demnach eine Schwenkbewegung in einer Fahrzeugquerebene um eine in Fahrzeuglängsrichtung verlaufende Drehachse 10 ausführen.

Die Prinzipskizze nach Fig 2 zeigt einen Lösungsvorschlag, bei der anstelle von Gleitbahnen 4 und 5 und Führungslagern 11 jeweils paarweise zusammenwirkende - vordere - Führungslenker 12, 13 und paarweise zusammenwirkende - hintere - Führungslenker 14 und 15 eingesetzt werden. Die Führungslenker 12 und 13 bzw. 14 und 15 sind so ausgebildet und angeordnet, daß sich ihre Verlängerungen schneiden und die ideellen Führungsgelenke 6 (vorne) und 7 (hinten) bilden. Die Gerade 9, die die ideellen Führungsgelenke 6 und 7 miteinander verbindet, bildet auch bei dieser Anordnung die Drehachse 10, die im übrigen die bereits erläuterte Lage in bezug auf die Fahrbahnebene 8 einnimmt. Die paarweise zusammenwirkenden Führungslenker 12, 13 und 14, 15 weisen Gelenke 16 auf.

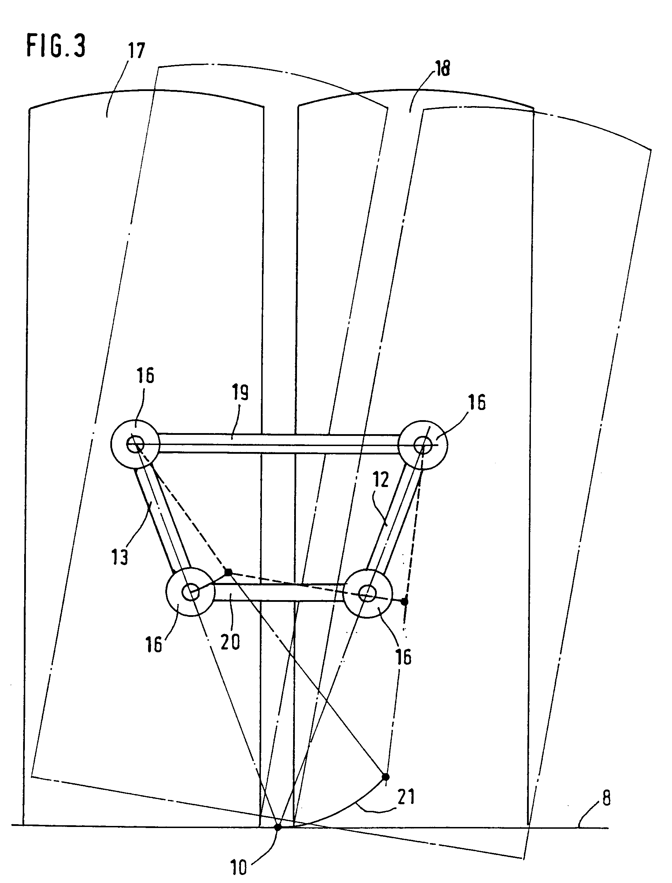

Anhand der Schemazeichnung nach Fig. 3 wird erläutert, welche Auswirkungen eine veränderte Stellung des Fahrzeugrads 2 auf die Lage der Drehachse 10 bei Abweichungen der Fahrbahnebene 8 von der Horizontalen bzw. bei Durchfahren einer Rechtskurve hat. Hierbei nimmt der Sturz zur Fahrzeugmitte hin zu.

Das Fahrzeugrad 2 setzt sich aus einem linken Rad 17, dem kurvenäußeren, und einem rechten Rad 18, dem kurveninneren, zusammen. Die in der Zeichnung oben liegenden Gelenke 16 der paarweise zusammenwirkenden Führungslenker 12, 13 und 14, 15 sind am Fahrzeugrahmen 19 angelenkt. Die unteren Gelenke 16 dieser Führungslenker sind am Radträger 20 angelenkt. Wegen der getroffenen Anordnung der Gelenke (Gelenke 16 am Fahrzeugrahmen 19 oben liegend und Gelenke 16 am Radträger 20 unten liegend) stellt sich beim Durchfahren einer Rechtskurve eine Verlagerung der Drehachse 10 entlang einer Bewegungsbahn 21 ein. Die Bewegungsbahn 21 hat ihren Beginn etwa auf Höhe der Fahrbahnebene 8 und führt in Vertikalrichtung nach oben und ist zudem zur Fahrzeugmitte hin gerichtet. Die Verlagerung der Drehachse 10 entlang der Bewegungsbahn 21 ist kinematisch bedingt. In Vertikalrichtung beträgt die Verlagerung - je nach konstruktiver Auslegung - etwa 8 cm bis 15 cm. Es ist vorteilhaft, die Lage der Drehachse 10 konstruktiv so zu wählen, daß sie in Ausgangs- oder Konstruktionslage um einige Zentimeter unterhalb der Fahrbahnebene 8 zu liegen kommt.

Die Schemazeichnung nach Fig. 4 beruht auf einer Anordnung, die in einem wesentlichen Punkt von derjenigen nach Fig. 3 abweicht. Die Lage der Gelenke 16 der Führungslenker 12, 13 und 14, 15 wurde in der Weise vertauscht, daß die Gelenke 16 am Radträger 20 oben liegen, während die Gelenke 16 am Fahrzeugrahmen 19 unten liegen. Hieraus resultiert eine Verlagerung der Drehachse 10 auf der Bewegungsbahn 21, die in diesem Fall nach oben und in Richtung auf die Fahrzeugaußenseite verläuft.

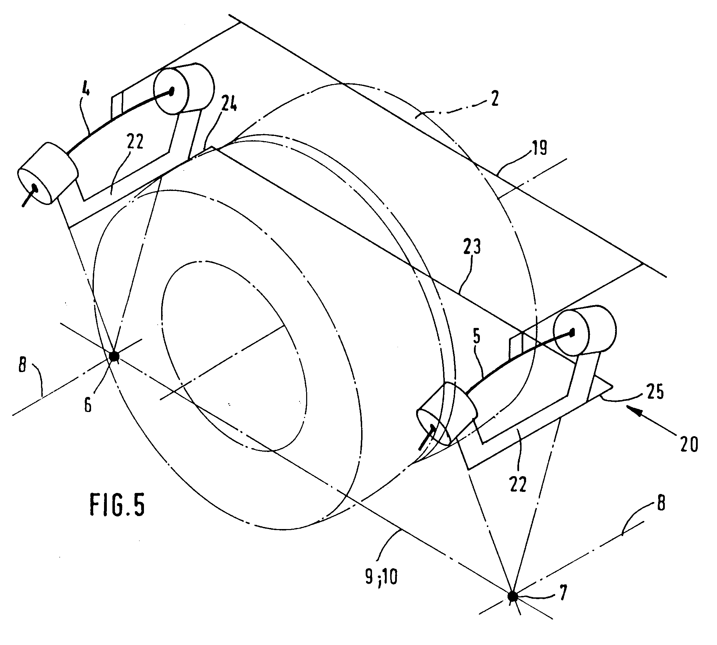

Die Fig. 5 gibt ein erstes Ausführungsbeispiel einer erfindungsgemäßen Radaufhängung 1 schematisch wieder, die auf dem Lösungsprinzip nach Fig. 1 beruht. Das Fahrzeugrad 2 wird vom Radträger 20 getragen. U-förmige Bügel 22 sind mit dem Radträger 20 fest verbunden und nehmen die Führungslager 11 fest auf, über die der Radträger 20 längs der Gleitbahnen 4 und 5 geführt ist. Aus der Abbildung ist ferner ersichtlich, daß der Radträger 20 aus einem in Fahrzeuglängsrichtung verlaufenden Längsträger 23 und zwei in Fahrzeugquerrichtung verlaufenden Querträgern 24 (vorne) und 25 (hinten) gebildet ist.

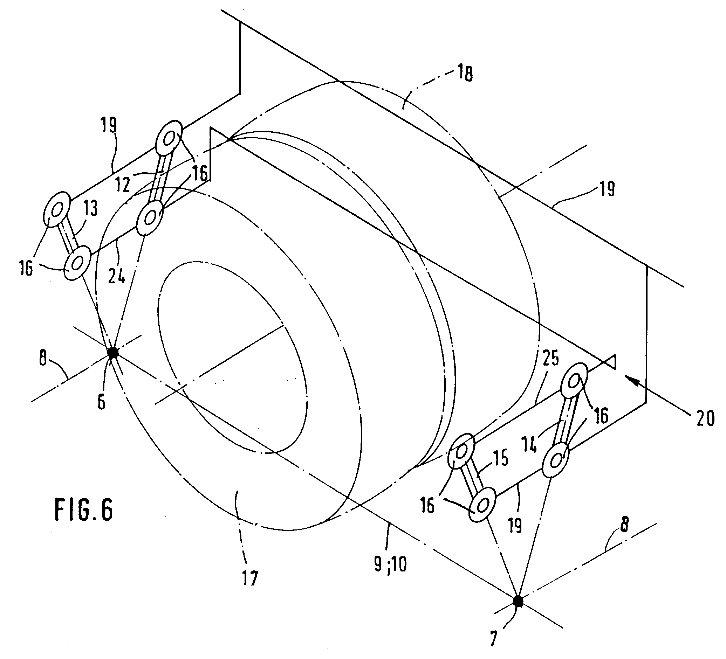

Die Fig. 6 zeigt in schematischer Perspektivdarstellung ein weiteres Ausführungsbeispiel einer erfindungsgemäßen Radaufhängung 1, das auf dem Lösungsprinzip nach Fig. 2 und unter Berücksichtigung der Erkenntnisse, die aus abweichenden kinematischen Verhältnissen resultieren, gefunden wurde. Die oben liegenden Gelenke 16 der vorne liegenden Führungslenker 12 und 13 sind am Fahrzeugrahmen 19 festgelegt. Die darunter liegenden Gelenke 16 sind mit dem vorderen Querträger 24 des Radträgers 20 gelenkig verbunden. Hinsichtlich der kinematischen Verhältnisse stimmt die Anlenkung der Führungslenker 12 und 13 mit den Verhältnissen überein, die der Abbildung entsprechend Fig. 3 zugrunde liegen. Bei dieser Anlenkung wird sich das ideelle Führungsgelenk 6 bzw. der im vorderen Bereich des Fahrzeugrads 2 liegende Abschnitt der Drehachse 10 auf einer nach innen und oben gerichteten Bewegungsbahn 21 verlagern.

Was die Anordnung der Führungslenker 14 und 15 anbelangt, liegen die Verhältnisse umgekehrt. Die oben liegenden Gelenke 16 sind am hinteren Querträger 25 des Radträgers 20 festgelegt. Die darunter liegenden Gelenke 16 sind mit dem Fahrzeugrahmen 19 verbunden. Insoweit sind hier die kinematischen Verhältnisse anzutreffen, wie sie im Zusammenhang mit der Abbildung nach Fig. 4 erläutert wurden. Beim Durchfahren einer Rechtskurve wird sich das ideelle Führungsgelenk 7 bzw. der hintere Abschnitt der Drehachse 10 auf einer Bewegungsbahn 21 verlagern, die in Richtung Fahrzeugaußenseite bzw. kurvenäußeres Rad 17 sowie in Vertikalrichtung nach oben zeigt.

Festzuhalten ist aufgrund des vorstehend Gesagten, daß die Verlagerung des ideellen Führungsgelenkes 6 bzw. des vorderen Abschnitts der Drehachse 10 nach innen und die gegenüberliegende Verlagerung des ideellen Führungsgelenkes 7 bzw. des hinteren Abschnitts der Drehachse 10 nach außen entgegengesetzt gerichtet verlaufen. Es stellt sich eine Kompensation der einander entgegengesetzt verlaufenden Verlagerungen der Drehachse 10 ein. Auf die anteiligen Radlasten der Räder 17 und 18 in Fahrbahnebene bezogen bedeutet dies, daß die Verteilung annähernd gleich bleibt. Im Ergebnis verhält sich die Radaufhängung 1 etwa wie eine zwillingsbereifte Starrachse, bei der eine gleichmäßige Verteilung der Radlasten innerhalb eines Fahrzeugrads vorliegt. Es können hohe Querkräfte aufgenommen werden, so daß die erfindungsgemäße Radaufhängung eine sehr gute Seitenführung gewährleistet.

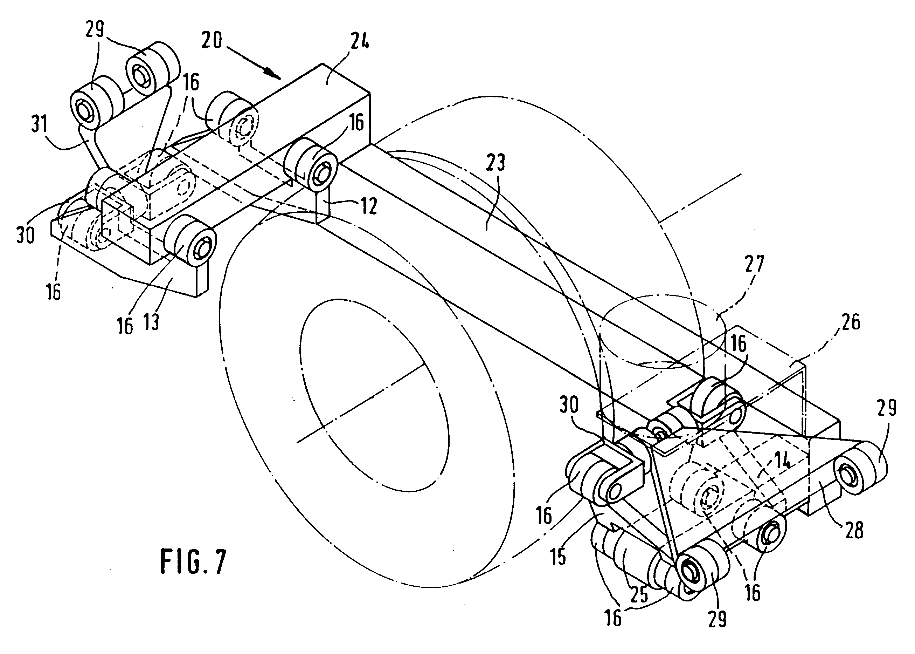

In Fig. 7 ist ein konstruktiv abgewandeltes und um zusätzliche Bauteile ergänztes Ausführungsbeispiel in vereinfachter, perspektivischer Darstellung gezeigt. Der Radträger 20 mit seinem Längsträger 23 und dem vorderen und hinteren Querträger 24 und 25 ist aus Kastenprofilen in Schweißkonstruktion zusammengefügt. Am hinteren Ende des Längsträgers 23 ist ein winkelförmiges Lager 26 z. B. durch eine Schweißverbindung befestigt. Zwischen dem Lager 26 und dem Fahrzeugrahmen (nicht eingezeichnet) befindet sich eine Luftfeder 27. Die Lenker 14 und 15 sind als Dreieckslenker ausgebildet. Die oben liegenden Gelenke 16 sind mittelbar über einen weiteren Führungslenker 28 über Gelenke 29 mit dem Fahrzeugrahmen 19 mittelbar verbunden.

Der vordere Querträger 24 nimmt die oben liegenden Gelenke 16 der Führungslenker 12 und 13 auf. Die unten liegenden Gelenke 16 der Führungslenker 12 und 13 sind über eine Koppel 30 miteinander verbunden. An der Koppel 30 greift ein etwa vertikal gerichteter zusätzlicher Führungslenker 31 an, der ebenfalls über Gelenke 29 verfügt, über die er mit dem Fahrzeugrahmen (nicht dargestellt) verbunden ist. Der Nickpol der Anordnung wird durch den Schnittpunkt der Verlängerungen des hinteren, etwa horizontal verlaufenden Führungslenkers 28 mit dem vorderen, etwa vertikal verlaufenden Führungslenker 31 gebildet. Hierdurch stellt sich beim Ein- und Ausfedern ein Wandern des Nickpols ein. Um einen festen Nickpol zu erhalten, müßten die unteren Gelenke 16 der Führungslenker 12 und 13 direkt am Fahrzeugrahmen 19 angelenkt werden. In diesem Fall wäre der zusätzliche Lenker 28 mit einem zusätzlichen Freiheitsgrad in Fahrzeuglängsrichtung zu versehen.

Um die Radlastschwankungen innerhalb des Fahrzeugrads 2 möglichst gering zu halten, kann die Höhe der Luftfeder 27 im Sinne einer Optimierung variiert werden. Desgleichen können, um dieses Ziel zu erreichen, die vorzusehenden Elastizitäten und Rückstellmomente so ausgelegt werden, daß sie sich auf die Verteilung der Radlasten günstig auswirken.

Die Luftfeder 27 kann auch zwischen der Koppel 30 und dem Fahrzeugrahmen 19 angeordnet sein. Dies hat den Vorteil, daß Einwirkungen von der Luftfeder auf die Radlastverteilung ausgeschlossen sind.

Wie eingangs erwähnt wurde, haben Starrachsen in Verbindung mit zwillingsbereiften Fahrzeugrädern insbesondere die Vorteile einer Reifenlage zur Fahrbahnebene, die unabhängig von der Aufbauneigung ist; die Spur- und die Sturzänderungen bei gleichseitigem Ein- und Ausfedern beträgt Null. Ferner sind die Radlastschwankungen innerhalb des Zwillingspaketes relativ gering. Mit der erfindungsgemäßen Anordnung werden einerseits die einer Starrachse anhaftenden Nachteile vermieden, ohne aber andererseits die einer Starrachse inhärenten Vorteile aufzugeben. Dies soll an folgenden Zahlenbeispielen verdeutlicht werden, die einen Vergleich der Radlastverteilungen innerhalb einer Starrachse und einer Achse mit der erfindungsgemäßen Radaufhängung zulassen.

In der nachfolgenden Tabelle sind die Radlasten F1, F2, F3 und F4 in Newton (N) als Funktion der Querbeschleunigung in m/s² für eine Starrachse und die erfindungsgemäße Anordnung angegeben. F1 gibt die Ladlast des kurvenäußeren Rads und F2 die Radlast des unmittelbar benachbarten Rades wieder. F4 bezieht sich auf das kurveninnere Rad, während F3 die Radlast des dem kurveninneren benachbarten Rades wiedergibt. Die Masse auf der betrachteten Achse liegt in allen Fällen bei 10 900 kg. Die Schwerpunktshöhe beträgt 1,5 m. Die Radlasten sind in der Folge F1, F2, F3 und F4 angegeben.

Bei einer Querbeschleunigung von 2,0 m/s²:
- Starrachse:: 35 000 N, 32 000 N, 22 000 N, 17 500 N
- Achse nach der Erfindung:: 35 000 N, 33 500 N, 17 000 N, 14 000 N
Bei einer Querbeschleunigung von 3,0 m/s²:
- Starrachse:: 37 000 N, 35 000 N, 17 000 N, 13 000 N
- Achse nach der Erfindung:: 40 000 N, 37 500 N, 14 000 N, 14 000 N
Aus den angeführten Vergleichszahlen geht besonders deutlich hervor, daß die Radlastverteilung innerhalb des zwillingsbereiften Fahrzeugrads bei der erfindungsgemäßen Radaufhängung für praktische Verhältnisse keinen erheblichen Schwankungen unterliegt. Die erfindungsgemäße Radaufhängung weist die Vorteile einer Starrachse auf, ohne jedoch deren Nachteile in Kauf nehmen zu müssen. Darüber hinaus verhält sich die erfindungsgemäße Radaufhängung bei Fahrbahnunebenheiten besser als eine Starrachse, was folgende Vergleichszahlen verdeutlichen:
Unter der Annahme, daß die zwillingsbereiften Fahrzeugräder jeweils für sich auf zwei Ebenen stehen, die jeweils um eine in Fahrzeuglängsrichtung verlaufende, in Höhe der Ebene und - bezogen auf die Radbreite - mittig liegende Drehachse gleichsinnig neigbar sind, ergeben sich folgende Radlasten F1, F2, F3 und F4:
Bei einer Neigung unter einem Winkel von 4° gegenüber der Horizontalen:
- Starrachse:: 17 500 N, 40 000 N, 13 000 N, 36 000 N
- Achse nach der Erfindung:: 26 000 N, 27 500 N, 27 000 N, 26 500 N
Bei einer Neigung unter einem Winkel von -4° gegenüber der Horizontalen:
- Starrachse:: 36 000 N, 13 000 N, 40 000 N, 17 500 N
- Achse nach der Erfindung:: 26 500 N, 27 000 N, 27 500 N, 26 000 N
Die Masse der betrachteten Achse beträgt auch hier 10 900 kg.

### Bezugszeichen

- 1: Radaufhängung
- 2: Fahrzeugrad
- 3: Fahrzeugfestpunkt
- 4: Gleitbahnen
- 5: Gleitbahnen
- 6: ideelles Führungsgelenk
- 7: ideelles Führungsgelenk
- 8: Fahrbahnebene
- 9: Gerade
- 10: Drehachse
- 11: Führungslager
- 12: Führungslenker
- 13: Führungslenker
- 14: Führungslenker
- 15: Führungslenker
- 16: Gelenk
- 17: linkes Rad
- 18: rechtes Rad
- 19: Fahrzeugrahmen
- 20: Radträger
- 21: Bewegungsbahn der Drehachse 10
- 22: U-förmige Bügel
- 23: Längsträger
- 24: Querträger
- 25: Querträger
- 26: Lager
- 27: Luftfeder
- 28: Führungslenker
- 29: Gelenk
- 30: Koppel
- 31: Führungslenker

## Patentansprüche (Patentansprüche für folgende(n) Vertragsstaat(en): AT, SE)

1. Radaufhängung (1) für ein Fahrzeugrad (2), das von einem Radträger (20) getragen ist, der gegenüber einem Fahrzeugrahmen (3, 19) durch Führungs (12-15)- und Federmittel (27) höhenbeweglich geführt ist, wobei die Radaufhängung (1) einen zusätzlichen Freiheitsgrad aufweist, der dem Radträger (20) eine Schwenkbewegung in einer Fahrzeugquerebene um eine in Fahrzeuglängsrichtung verlaufende Drehachse (10) erlaubt, dadurch **gekennzeichnet,** daß diese Drehachse (10) etwa in der Mitte des Fahrzeugrades (2) - bezogen auf seine Breite - und etwa in Höhe der Fahrbahnebene (8) verläuft.

2. Radaufhängung nach Anspruch 1, dadurch **gekennzeichnet,** daß das Fahrzeugrad (2) eine Zwillingsbereifung (17, 18) oder einen Breitreifen aufweist.

3. Radaufhängung nach den Ansprüchen 1 und 2, dadurch **gekennzeichnet,** daß die Führungsmittel des Radträgers paarweise am Radträger (20) und am Fahrzeugrahmen (19) in Gelenken (16) angeschlossene Führungslenker (12, 13 und 14, 15) einschließen, wobei die Führungslenker (12, 13 und 14, 15) ideelle Führungsgelenke (6, 7) bilden und eine die ideellen Führungsgelenke (6, 7) verbindende Gerade (9) die Drehachse (10) darstellt.

4. Radaufhängung nach den Ansprüchen 1 und 2, dadurch **gekennzeichnet,** daß der Radträger (20) schwenkbeweglich an kreisförmigen Gleitbahnen (4, 5) geführt ist, deren Krümmungszentren die ideellen Führungsgelenke (6, 7) bilden und eine die ideellen Führungsgelenke (6, 7) verbindende Gerade (9) die Drehachse (10) darstellt.

5. Radaufhängung nach Anspruch 4, dadurch **gekennzeichnet,** daß die Gleitbahnen (4, 5) unmittelbar oder über Führungslenker (28, 31) am Fahrzeugrahmen (19) befestigt sind und der Radträger (20) über Führungslager (11) längs der Gleitbahnen (4, 5) geführt ist.

6. Radaufhängung nach den Ansprüchen 1 bis 5, dadurch **gekennzeichnet,** daß der Radträger (20) aus mindestens einem in Fahrzeuglängsrichtung verlaufenden Längsträger (23) und zwei in Fahrzeugquerrichtung verlaufenden Querträgern (24, 25) gebildet ist.

7. Radaufhängung nach Anspruch 3, dadurch **gekennzeichnet,** daß die Gelenke (16) am Fahrzeugrahmen (10) und die Gelenke (16) am Radträger (20) der paarweise zusammenwirkenden Führungslenker (12, 13 und 14, 15) in Vertikalrichtung derart angeordnet sind, daß die Gelenke (16) am Fahrzeugrahmen (19) oberhalb oder unterhalb der Gelenke (16) am Radträger (20) liegen.

8. Radaufhängung nach den Ansprüchen 3 und 7, dadurch **gekennzeichnet,** daß, bezogen auf die Fahrzeuglängsrichtung, den Gelenken (16) jeweils paarweise zusammenwirkender Führungslenker (12, 13 und 14, 15) am Fahrzeugrahmen (10) jeweils die Gelenke (16) dieser Führungslenker (12, 13 und 14, 15) am Radträger (20) in gleicher Höhenlage gegenüberliegen.

9. Radaufhängung nach den Ansprüchen 6 und 7 oder den Ansprüchen 6 und 8, dadurch **gekennzeichnet,** daß die Querträger (24, 25) die Gelenke (16) am Radträger (20) der jeweils paarweise angeordneten Führungslenker (12, 13 und 14, 15) aufnehmen.

10. Radaufhängung nach einem der Ansprüche 1, 3, 7 bis 9, dadurch **gekennzeichnet,** daß jeweils paarweise zusammenwirkende Führungslenker (12, 13 und 14, 15) ein Bestandteil eines Viergelenk-Koppelgetriebes (12, 13, 24, 30 bzw. 14, 15, 25, 30) sind.

11. Radaufhängung nach Anspruch 9, dadurch **gekennzeichnet,** daß die Gelenke (16) am Radträger (20) aus in Fahrzeuglängsrichtung verlaufende Lagerbolzen an den Querträgern (24, 25) und Lagern der Führungslenker (12, 13, 14, 15) gebildet sind.

12. Radaufhängung nach den Ansprüchen 7, 8 und 9, dadurch **gekennzeichnet,** daß, bezogen auf die Fahrtrichtung, die vor dem Fahrzeugrad (2) liegenden Führungslenker (12, 13) so angeordnet sind, daß ihre Gelenke (16) am Radträger (20) oberhalb ihrer Gelenke (16) am Fahrzeugrahmen (19) liegen und daß die hinter dem Fahrzeugrad (2) liegenden Führungslenker (14, 15) so angeordnet sind, daß ihre Gelenke (16) am Radträger (20) unterhalb von den Gelenken (16) am Fahrzeugrahmen (19) liegen oder umgekehrt.

13. Radaufhängung nach den Ansprüchen 1 und 12, dadurch **gekennzeichnet,** daß, bezogen auf die Fahrtrichtung, der Radträger (20) in seinem hinter dem Fahrzeugrad (2) liegenden Bereich oder die Koppel (30) über eine Luftfeder (29) am Fahrzeugrahmen (10) abgestützt sind.

14. Radaufhängung nach mindestens einem der Ansprüche 1, 3, 7, 8, 9, 10 oder 12, dadurch **gekennzeichnet,** daß die Gelenke (16) am Fahrzeugrahmen (19) der Führungslenker (12, 13 und 14, 15) mittelbar über zusätzliche Führungslenker (31 und 28) am Fahrzeugrahmen (19) festgelegt sind.

15. Radaufhängung nach Anspruch 1, **gekennzeichnet** durch die Verwendung bei einem Nutzkraftfahrzeug, insbesondere einem Omnibus.

## Patentansprüche (Patentansprüche für folgende(n) Vertragsstaat(en): DE, ES, FR, GB, IT)

1. Radaufhängung (1) für ein Fahrzeugrad (2), das von einem Radträger (20) getragen ist, der gegenüber einem Fahrzeugrahmen (3, 19) durch Führungs (12-15)- und Federmittel (27) Höhenbeweglich geführt ist, wobei die Radaufhängung (1) einen zusätzlichen Freiheitsgrad aufweist, der dem Radträger (20) eine Schwenkbewegung in einer Fahrzeugquerebene um eine in Fahrzeuglängsrichtung verlaufende Drehachse (10) erlaubt, dadurch **gekennzeichnet,** daß der Radträger (20) aus mindestens einem Längsträger (23) und zwei Querträgern (24, 25) gebildet ist, daß die Führungsmittel paarweise am Radträger (20) und am Fahrzeugrahmen (19) in Gelenken (16) angeschlossene Führungslenker (12, 13 und 14, 15) einschließen, die, bezogen auf die Fahrzeuglängsrichtung, vor und hinter dem Fahrzeugrad (2) liegen und die ideelle Führungsgelenke (6, 7) bilden, wobei eine diese ideellen Führungsgelenke (6, 7) verbindende Gerade (9) die Drehachse (10) darstellt, die etwa in der Mitte des Fahrzeugrades (2) - bezogen auf seine Breite - und etwa in Höhe der Fahrbahnebene (8) verläuft.

2. Radaufhängung (1) für ein Fahrzeugrad (2), das von einem Radträger (20) getragen ist, der gegenüber einem Fahrzeugrahmen (3, 19) durch Führungs (12-15)- und Federmittel (27) höhenbeweglich geführt ist, wobei die Radaufhängung (1) einen zusätzlichen Freiheitsgrad aufweist, der dem Radträger (20) eine Schwenkbewegung in einer Fahrzeugquerebene um eine in Fahrzeuglängsrichtung verlaufende Drehachse (10) erlaubt, dadurch **gekennzeichnet,** daß der Radträger (20) schwenkbeweglich an kreisförmigen Gleitbahnen (4, 5) geführt ist, deren Krümmungszentren die ideellen Führungsgelenke (6, 7) bilden und eine die ideellen Führungsgelenke (6, 7) verbindende Gerade (9) die Drehachse (10) darstellt.

3. Radaufhängung nach Anspruch 2, dadurch **gekennzeichnet,** daß die Gleitbahnen (4, 5) unmittelbar oder über Führungslenker (28, 31) am Fahrzeugrahmen (19) befestigt sind und der Radträger (20) über Führungslager (11) längs der Gleitbahnen (4, 5) geführt ist.

4. Radaufhängung nach Anspruch 1, dadurch **gekennzeichnet,** daß die Gelenke (16) am Fahrzeugrahmen (10) und die Gelenke (16) am Radträger (20) der paarweise zusammenwirkenden Führungslenker (12, 13 und 14, 15) in Vertikalrichtung derart angeordnet sind, daß die Gelenke (16) am Fahrzeugrahmen (19) oberhalb oder unterhalb der Gelenke (16) am Radträger (20) liegen.

5. Radaufhängung nach Anspruch 4, dadurch **gekennzeichnet,** daß, bezogen auf die Fahrzeuglängsrichtung, den Gelenken (16) jeweils paarweise zusammenwirkender Führungslenker (12, 13 und 14, 15) am Fahrzeugrahmen (10) jeweils die Gelenke (16) dieser Führungslenker (12, 13 und 14, 15) am Radträger (20) in gleicher Höhenlage gegenüberliegen.

6. Radaufhängung nach den Ansprüchen 4 oder 5, dadurch **gekennzeichnet,** daß die Querträger (24, 25) die Gelenke (16) am Radträger (20) der jeweils paarweise angeordneten Führungslenker (12, 13 und 14, 15) aufnehmen.

7. Radaufhängung nach einem der Ansprüche 1 oder 4 bis 6, dadurch **gekennzeichnet,** daß jeweils paarweise zusammenwirkende Führungslenker (12, 13 und 14, 15) ein Bestandteil eines Viergelenk-Koppelgetriebes (12, 13, 24, 30 bzw. 14, 15, 25, 30) sind.

8. Radaufhängung nach Anspruch 6, dadurch **gekennzeichnet,** daß die Gelenke (16) am Radträger (20) aus in Fahrzeuglängsrichtung verlaufende Lagerbolzen an den Querträgern (24, 25) und Lagern der Führungslenker (12, 13, 14, 15) gebildet sind.

9. Radaufhängung nach den Ansprüchen 4, 5 und 6, dadurch **gekennzeichnet,** daß, bezogen auf die Fahrtrichtung, die vor dem Fahrzeugrad (2) liegenden Führungslenker (12, 13) so angeordnet sind, daß ihre Gelenke (16) am Radträger (20) oberhalb ihrer Gelenke (16) am Fahrzeugrahmen (19) liegen und daß die hinter dem Fahrzeugrad (2) liegenden Führungslenker (14, 15) so angeordnet sind, daß ihre Gelenke (16) am Radträger (20) unterhalb von den Gelenken (16) am Fahrzeugrahmen (19) liegen oder umgekehrt.

10. Radaufhängung nach den Ansprüchen 1 und 9, dadurch **gekennzeichnet,** daß, bezogen auf die Fahrtrichtung, der Radträger (20) in seinem hinter dem Fahrzeugrad (2) liegenden Bereich oder die Koppel (30) über eine Luftfeder (29) am Fahrzeugrahmen (10) abgestützt sind.

11. Radaufhängung nach mindestens einem der Ansprüche 1, 4, 5, 6, 7 oder 9, dadurch **gekennzeichnet,** daß die Gelenke (16) am Fahrzeugrahmen (19) der Führungslenker (12, 13 und 14, 15) mittelbar über zusätzliche Führungslenker (31 und 28) am Fahrzeugrahmen (19) festgelegt sind.

12. Radaufhängung nach Anspruch 1, **gekennzeichnet** durch die Verwendung bei einem Nutzkraftfahrzeug, insbesondere einem Omnibus.

## Claims (Claims for the following Contracting State(s): AT, SE)

1. Wheel suspension (1) for a vehicle wheel (2) carried by a wheel carrier (20) which is guided by guide means (12 - 15) and spring means (27) such that it can move vertically with respect to a chassis (3, 19), the wheel suspension (1) having an additional degree of freedom which allows the wheel carrier (20) to swivel in a transverse vehicle plane about an axis of rotation (10) extending in the longitudinal direction of the vehicle, characterised in that this axis of rotation (10) extends approximately in the centre of the vehicle wheel (2) - related to its width - and approximately on a level with the roadway plane (8).

2. Wheel suspension according to claim 1, characterised in that the vehicle wheel (2) has twin tyres (17, 18) or a wide tyre.

3. Wheel suspension according to claims 1 and 2, characterised in that the guide means of the wheel carrier comprise guide arms (12, 13 and 14, 15) which are connected in pairs to the wheel carrier (20) and to the chassis (19) at joints (16), the guide arms (12, 13 and 14, 15) forming ideal guide joints (6, 7) and a straight line (9) which connects the ideal guide joints (6, 7) representing the axis of rotation (10).

4. Wheel suspension according to claims 1 and 2, characterised in that the wheel carrier (20) is guided such that it can swivel at circular slideways (4, 5), the centres of curvature of which form the ideal guide joints (6, 7), and a straight line (9) which connects the ideal guide joints (6, 7) represents the axis of rotation (10).

5. Wheel suspension according to claim 4, characterised in that the slideways (4, 5) are secured directly or via guide arms (28, 31) to the chassis (19), and the wheel carrier (20) is guided along the slideways (4, 5) via guide bearings (11).

6. Wheel suspension according to claims 1 to 5, characterised in that the wheel carrier (20) is formed from at least one longitudinal member (23) extending in the longitudinal direction of the vehicle and two cross members (24, 25) extending in the transverse direction of the vehicle.

7. Wheel suspension according to claim 3, characterised in that the joints (16), disposed at the chassis (10), and the joints (16), disposed at the wheel carrier (20), of the guide arms (12, 13 and 14, 15), which co-operate in pairs, are arranged in the vertical direction such that the joints (16) at the chassis (19) lie above or below the joints (16) at the wheel carrier (20).

8. Wheel suspension according to claims 3 and 7, characterised in that, related to the longitudinal direction of the vehicle, the joints (16) of guide arms (12, 13 and 14, 15) at the wheel carrier (20) in each case lie opposite and at the same height as the joints (16) of these guide arms (12, 13 and 14, 15), which co-operate in pairs, at the chassis (10).

9. Wheel suspension according to claims 6 and 7 or claims 6 and 8, characterised in that the cross members (24, 25) comprise the joints (16), disposed at the wheel carrier (20), of the guide arms (12, 13 and 14, 15) arranged in respective pairs.

10. Wheel suspension according to one of claims 1, 3, 7 to 9, characterised in that guide arms (12, 13 and 14, 15) co-operating in respective pairs constitute a component part of a four-bar linkage (12, 13, 24, 30 and 14, 15, 25, 30, respectively).

11. Wheel suspension according to claim 9, characterised in that the joints (16) at the wheel carrier (20) are formed from bearing pins, which extend in the longitudinal direction of the vehicle, at the cross members (24, 25) and bearings of the guide arms (12, 13, 14, 15).

12. Wheel suspension according to claims 7, 8 and 9, characterised in that, related to the direction of travel, the guide arms (12, 13) lying before the vehicle wheel (2) are arranged such that their joints (16) at the wheel carrier (20) lie above their joints (16) at the chassis (19), and that the guide arms (14, 15) lying after the vehicle wheel (2) are arranged such that their joints (16) at the wheel carrier (20) lie below the joints (16) at the chassis (19) or vice versa.

13. Wheel suspension according to claims 1 and 12, characterised in that, related to the direction of travel, in its region lying after the vehicle wheel (2) the wheel carrier (20) and the coupler (30) are supported at the chassis (10) via an air spring (29).

14. Wheel suspension according to at least one of claims 1, 3, 7, 8, 9, 10 or 12, characterised in that the joints (16), disposed at the chassis (19), of the guide arms (12, 13 and 14, 15) are secured to the chassis (19) indirectly via additional guide arms (31 and 28).

15. Wheel suspension according to claim 1, characterised by its use with a commercial motor vehicle, in particular a motor bus.

## Claims (Claims for the following Contracting State(s): DE, ES, FR, GB, IT)

1. Wheel suspension (1) for a vehicle wheel (2) carried by a wheel carrier (20) which is guided by guide means (12 - 15) and spring means (27) such that it can move vertically with respect to a chassis (3, 19), the wheel suspension (1) having an additional degree of freedom which allows the wheel carrier (20) to swivel in a transverse vehicle plane about an axis of rotation (10) extending in the longitudinal direction of the vehicle, characterised in that the wheel carrier (20) is formed from at least one longitudinal member (23) and two cross members (24, 25), that the guide means comprise guide arms (12, 13 and 14, 15) which are connected in pairs to the wheel carrier (20) and to the chassis (19) at joints (16), lie before and after the vehicle wheel (2), related to the longitudinal direction of the vehicle, and form ideal guide joints (6, 7), a straight line (9) which connects these ideal guide joints (6, 7) representing the axis of rotation (10), which extends approximately in the centre of the vehicle wheel (2) - related to its width - and approximately on a level with the roadway plane (8).

2. Wheel suspension (1) for a vehicle wheel (2) carried by a wheel carrier (20) which is guided by guide means (12 - 15) and spring means (27) such that it can move vertically with respect to a chassis (3, 19), the wheel suspension (1) having an additional degree of freedom which allows the wheel carrier (20) to swivel in a transverse vehicle plane about an axis of rotation (10) extending in the longitudinal direction of the vehicle, characterised in that the wheel carrier (20) is guided such that it can swivel at circular slideways (4, 5), the centres of curvature of which form the ideal guide joints (6, 7), and a straight line (9) which connects the ideal guide joints (6, 7) represents the axis of rotation (10).

3. Wheel suspension according to claim 2, characterised in that the slideways (4, 5) are secured directly or via guide arms (28, 31) to the chassis (19), and the wheel carrier (20) is guided along the slideways (4, 5) via guide bearings (11).

4. Wheel suspension according to claim 1, characterised in that the joints (16), disposed at the chassis (10), and the joints (16), disposed at the wheel carrier (20), of the guide arms (12, 13 and 14, 15), which co-operate in pairs, are arranged in the vertical direction such that the joints (16) at the chassis (19) lie above or below the joints (16) at the wheel carrier (20).

5. Wheel suspension according to claim 4, characterised in that, related to the longitudinal direction of the vehicle, the joints (16) of guide arms (12, 13 and 14, 15) at the wheel carrier (20) in each case lie opposite and at the same height as the joints (16) of these guide arms (12, 13 and 14, 15), which co-operate in pairs, at the chassis (10).

6. Wheel suspension according to claim 4 or 5, characterised in that the cross members (24, 25) comprise the joints (16), disposed at the wheel carrier (20), of the guide arms (12, 13 and 14, 15) arranged in respective pairs.

7. Wheel suspension according to one of claims 1 or 4 to 6, characterised in that guide arms (12, 13 and 14, 15) co-operating in respective pairs constitute a component part of a four-bar linkage (12, 13, 24, 30 and 14, 15, 25, 30, respectively).

8. Wheel suspension according to claim 6, characterised in that the joints (16) at the wheel carrier (20) are formed from bearing pins, which extend in the longitudinal direction of the vehicle, at the cross members (24, 25) and bearings of the guide arms (12, 13, 14, 15).

9. Wheel suspension according to claims 4, 5 and 6, characterised in that, related to the direction of travel, the guide arms (12, 13) lying before the vehicle wheel (2) are arranged such that their joints (16) at the wheel carrier (20) lie above their joints (16) at the chassis (19), and that the guide arms (14, 15) lying after the vehicle wheel (2) are arranged such that their joints (16) at the wheel carrier (20) lie below the joints (16) at the chassis (19) or vice versa.

10. Wheel suspension according to claims 1 and 9, characterised in that, related to the direction of travel, in its region lying after the vehicle wheel (2) the wheel carrier (20) and the coupler (30) are supported at the chassis (10) via an air spring (29).

11. Wheel suspension according to at least one of claims 1, 4, 5, 6, 7 or 9, characterised in that the joints (16), disposed at the chassis (19), of the guide arms (12, 13 and 14, 15) are secured to the chassis (19) indirectly via additional guide arms (31 and 28).

12. Wheel suspension according to claim 1, characterised by its use with a commercial motor vehicle, in particular a motor bus.

## Revendications (Revendications pour l'(les) Etat(s) contractant(s) suivant(s): AT, SE)

1. Suspension (1) pour une roue de véhicule (2) supportée par un support de roue (20) qui est mobile et guidé en hauteur par rapport à un châssis (3, 19) du véhicule grâce à des moyens de guidage (12-15) et des moyens élastiques (27), la suspension (1) présentant un degré de liberté supplémentaire qui permet au support de roue (20) d'osciller dans un plan transversal du véhicule autour d'un axe de rotation (10) s' étendant dans une direction longitudinale du véhicule, **caractérisée** en ce que ledit axe de rotation (10) se trouve approximativement au milieu de la largeur de la roue (2) et approximativement au niveau du plan (8) de la chaussée.

2. Suspension selon la revendication 1, **caractérisée** en ce que la roue (2) du véhicule comporte des pneus jumelés (17, 18) ou un pneu large.

3. Suspension selon les revendications 1 et 2, **caractérisée** en ce que les moyens de guidage du support de roue comprennent des paires de bras de guidage (12, 13 et 14, 15) raccordés par des articulations (16) au support de roue (20) et au châssis (19), ces bras (12, 13 et 14, 15) formant des articulations idéales de guidage (6, 7), où une droite (9) reliant ces articulations idéales (6, 7) représente ledit axe de rotation (10).

4. Suspension selon les revendications 1 et 2, **caractérisée** en ce que le support de roue (20) est guidé dans son mouvement oscillant sur des glissières (4, 5) en arc de cercle, dont les centres de courbure forment les articulations idéales de guidage (6, 7) et où une droite (9) reliant ces articulations idéales (6, 7) représente ledit axe de rotation (10).

5. Suspension selon la revendication 4, **caractérisée** en ce que les glissières (4, 5) sont fixées au châssis (19) directement ou par l'intermédiaire de bras de guidage (28, 31) et en ce que le support de roue (20) est guidé le long des glissières (4, 5) au moyen de paliers de guidage (11).

6. Suspension selon les revendications 1 à 5, **caractérisée** en ce que le support de roue (20) est formé d'au moins un support longitudinal (23) s'étendant dans la direction longitudinale du véhicule et de deux supports transversaux (24, 25) s'étendant dans la direction transversale du véhicule.

7. Suspension selon la revendication 3, **caractérisée** en ce que les articulations (16) des bras de guidage (12, 13, et 14, 15) coopérant deux à deux sont disposées sur le châssis (19) et sur le support de roue (20) en direction verticale de telle manière que les articulations (16) sur le châssis (19) se trouvent au-dessus ou au-dessous des articulations (16) sur le support de roue (20).

8. Suspension selon les revendications 3 et 7, **caractérisée** en ce que, par rapport à la direction longitudinale du véhicule, à l'opposé des articulations (16) sur le châssis (19) de chaque paire de bras de guidage (12, 13 et 14, 15) coopérant deux à deux, les articulations respectives (16) de ces bras de guidage (12, 13 et 14, 15) sur le support de roue (20) se trouvent à la même hauteur.

9. Suspension selon les revendications 6 et 7 ou les revendications 6 et 8, **caractérisée** en ce que les supports transversaux (24, 25) du support de roue (20) portent les articulations (16) des bras de guidage (12, 13 et 14, 15) disposés par paires.

10. Suspension selon l'une des revendications 1, 3, 7 à 9, **caractérisée** en ce que les paires de bras de guidage (12, 13 et 14, 15) coopérant deux à deux font partie d'un mécanisme de couplage à compensation de couple à quatre articulations (12, 13, 24, 30 et 14, 15, 25, 30).

11. Suspension selon la revendication 9, **caractérisée** en ce que les articulations (16) sur le support de roue (20) sont formées par des tourillons s' étendant dans la direction longitudinale du véhicule sur les supports transversaux (24, 25) et par des paliers des bras de guidage (12, 13, 14, 15).

12. Suspension selon les revendications 7, 8 et 9, **caractérisée** en ce que, par rapport à la direction de marche, les bras de guidage (12, 13) situés devant la roue (2) sont disposés de telle manière que leurs articulations (16) sur le support de roue (20) se trouvent au-dessus de leurs articulations (16) sur le châssis (19) et en ce que les bras de guidage (14, 15) situés derrière la roue (2) sont disposés de telle manière que leurs articulations (16) sur le support de roue (20) se trouvent au-dessous de leurs articulations (16) sur le châssis (19), ou inversement.

13. Suspension selon les revendications 1 et 12, **caractérisée** en ce que, par rapport à la direction de marche la zone du support de roue (20) située derrière la roue (2), ou l'organe de couplage (30), s'appuie sur le châssis (19) au moyen d'un ressort pneumatique (29).

14. Suspension selon au moins l'une des revendications 1, 3, 7, 8, 9, 10 ou 12, **caractérisée** en ce que les articulations (16) des bras de guidage (12, 13 et 14, 15) sur le châssis (19) sont fixées indirectement au châssis (19) au moyen de bras de guidage additionnels (31 et 28).

15. Suspension selon la revendication 1, **caractérisée** par son utilisation dans un véhicule automobile utilitaire notamment un autobus.

## Revendications (Revendications pour l'(les) Etat(s) contractant(s) suivant(s): DE, ES, FR, GB, IT)

1. Suspension (1) pour une roue de véhicule (2) supportée par un support de roue (20) qui est mobile et guidé en hauteur par rapport à un châssis (3, 19) du véhicule grâce à des moyens de guidage (12-15) et des moyens élastiques (27), la suspension (1) présentant un degré de liberté supplémentaire qui permet au support de roue (20) d'osciller dans un plan transversal du véhicule autour d'un axe de rotation (10) s' étendant dans une direction longitudinale du véhicule, **caractérisée** en ce que le support de roue (20) est formé d'au moins un support longitudinal (23) et de deux supports transversaux (24, 25), en ce que les moyens de guidage comprennent des paires de bras de guidage (12, 13 et 14, 15) raccordés par des articulations (16) au support de roue (20) et au châssis (19), ces bras étant situés par rapport à la direction longitudinale du véhicule, devant et derrière la roue (2) et formant des articulations idéales de guidage (6, 7), où une droite (9) reliant ces articulations idéales (6, 7) représente ledit axe de rotation (10) lequel se trouve approximativement au milieu de la largeur de la roue (2) et approximativement au niveau du plan (8) de la chaussée.

2. Suspension (1) pour une roue de véhicule (2) supportée par un support de roue (20) qui est mobile et guidé en hauteur par rapport à un châssis (3, 19) du véhicule grâce à des moyens de guidage (12-15) et des moyens élastiques (27), la suspension (1) présentant un degré de liberté supplémentaire qui permet au support de roue (20) d'osciller dans un plan transversal du véhicule autour d'un axe de rotation (10) s' étendant dans une direction longitudinale du véhicule, **caractérisée** en ce que le support de roue (20) est guidé dans son mouvement oscillant sur des glissières (4, 5) en arc de cercle, dont les centres de courbure forment des articulations idéales de guidage (6, 7) et où une droite (9) reliant ces articulations idéales (6, 7) représente ledit axe de rotation (10).

3. Suspension selon la revendication 2, **caractérisée** en ce que les glissières (4, 5) sont fixées au châssis (19) directement ou par l'intermédiaire de bras de guidage (28 31) et en ce que le support de roue (20) est guidé le long des glissières (4, 5) au moyen de paliers de guidage (11).

4. Suspension selon la revendication 1 **caractérisée** en ce que les articulations (16) des bras de guidage (12, 13, et 14, 15) coopérant deux à deux sont disposées sur le châssis (19) et sur le support de roue (20) en direction verticale de telle manière que les articulations (16) sur le châssis (19) se trouvent au-dessus ou au-dessous des articulations (16) sur le support de roue (20).

5. Suspension selon la revendication 4, **caractérisée** en ce que, par rapport à la direction longitudinale du véhicule, à l'opposé des articulations (16) sur le châssis (19) de chaque paire de bras de guidage (12, 13 et 14, 15) coopérant deux à deux, les articulations respectives (16) de ces bras de guidage (12, 13 et 14, 15) sur le support de roue (20) se trouvent à la même hauteur.

6. Suspension selon la revendication 4 ou 5, **caractérisée** en ce que les supports transversaux (24, 25) du support de roue (20) portent les articulations (16) des bras de guidage (12, 13 et 14 15) disposés par paires.

7. Suspension selon l'une des revendications 1 ou 4 à 6, **caractérisée** en ce que les paires de bras de guidage (12, 13 et 14, 15) coopérant deux à deux font partie d'un mécanisme de couplage à compensation de couple à quatre articulations (12, 13, 24, 30 et 14, 15, 25, 30).

8. Suspension selon la revendication 6, **caractérisée** en ce que les articulations (16) sur le support de roue (20) sont formées par des tourillons s' étendant dans la direction longitudinale du véhicule sur les supports transversaux (24, 25) et par des paliers des bras de guidage (12, 13, 14, 15).

9. Suspension selon les revendications 4, 5 et 6, **caractérisée** en ce que, par rapport à la direction de marche, les bras de guidage (12, 13) situés devant la roue (2) sont disposés de telle manière que leurs articulations (16) sur le support de roue (20) se trouvent au-dessus de leurs articulations (16) sur le châssis (19) et en ce que les bras de guidage (14, 15) situés derrière la roue (2) sont disposés de telle manière que leurs articulations (16) sur le support de roue (20) se trouvent au-dessous de leurs articulations (16) sur le châssis (19) , ou inversement.

10. Suspension selon les revendications 1 et 9, **caractérisée** en ce que par rapport à la direction de marche la zone du support de roue (20) située derrière la roue (2), ou l'organe de couplage (30), s'appuie sur le châssis (19) au moyen d'un ressort pneumatique (29).

11. Suspension selon au moins l'une des revendications 1, 4, 5, 6, 7 ou 9 **caractérisée** en ce que les articulations (16) des bras de guidage (12, 13 et 14, 15) sur le châssis (19) sont fixées indirectement au châssis (19) au moyen de bras de guidage additionnels (31 et 28).

12. Suspension selon la revendication 1, **caractérisée** par son utilisation dans un véhicule automobile utilitaire notamment un autobus.
